# EUROPEAN PATENT APPLICATION

(11) **EP 3 984 829 A1**
(43) Date of publication of application: **20.04.2022**
(21) Application number: 20821982.4
(22) Date of filing: 06.04.2020
(51) Int. Cl.: B60R 16/02, B60R 16/03, B60R 16/033, H02J 7/00

(54) **HIGH-VOLTAGE POWER SUPPLY**

(30) Priority: 11.06.2019 JP 2019109010
(71) Applicant: Imasen Electric Industrial Co., Ltd., Inuyama-shi, Aichi 484-8507 (JP)
(72) Inventor: YAMANOUE, Koichi, Inuyama-shi, Aichi 484-8507 (JP); TAKAHASHI, Masayoshi, Inuyama-shi, Aichi 484-8507 (JP); MAKIO, Daisuke, Inuyama-shi, Aichi 484-8507 (JP)
(74) Representative: Office Freylinger
(86) International application number: PCT/JP2020/015514
(87) International publication number: WO 2020/250553

(57) **Abstract**

Provided is a safe, inexpensive, and highly versatile vehicle-mounted high-voltage power supply. This high-voltage power supply (1) is a vehicle-mounted high-voltage power supply that is configured by a plurality of batteries (11, 12, 13, 14, 15, 16, 17, 18) being connected in series, wherein output terminals provided between the batteries are connected to the ground (5) of the vehicle body. This high-voltage power supply (1) supplies power to a load (3) connected in series with all of the plurality of batteries.

## Description

### TECHNICAL FIELD

The present invention relates to a vehicle-mounted high-voltage power supply to be installed in a vehicle or the like to supply high-voltage electric power.

### BACKGROUND ART

Secondary batteries in which a plurality of batteries are connected in series are widely used as power supplies for vehicles. In such secondary batteries, the output voltage can be regulated by increasing the number of batteries so that power can be supplied in an efficient manner. For example, by supplying high-voltage power, the current can be lowered to reduce wiring loss, and motor output can easily be increased.

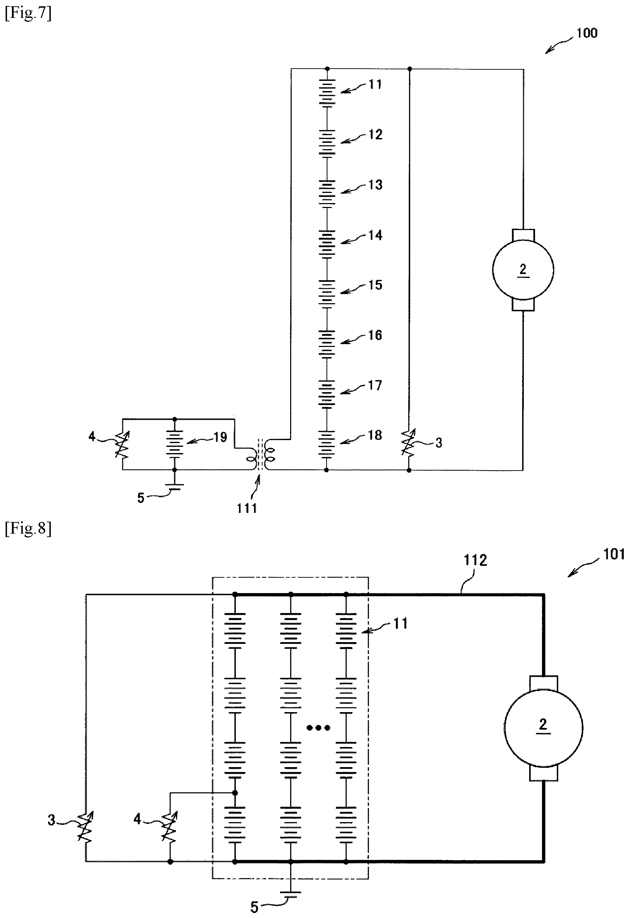

On the other hand, increasing the voltage of a vehicle-mounted power supply necessitates electric shock preventing measures. In particular, power transmission systems in which the operating voltage is 60 V DC or more require stringent safety measures. Specifically, an insulating coating or various kinds of grounded covers are required. Fig. 7 and Fig. 8 show conventional examples of circuits in which electric power with a voltage of less than 60 V is supplied from high-voltage power supplies capable of high-capacity output of 60 V or more to loads connected to cabins or baggage compartments.

Fig. 7 shows a circuit in which electric power is supplied from a vehicle-mounted high-voltage power supply 100 to a high-voltage compatible load 3 and a vehicle body side load 4 grounded by a ground terminal 5. An isolation transformer 111 is arranged between the high-voltage power supply 100 and the load 4, and supplies electric power to the load 4 by electromagnetic induction. Fig. 8 shows a circuit in which electric power is supplied from a high-voltage power supply 101 to a load 3 and a load 4, respectively. The high-voltage power supply 101 employs a plurality of secondary batteries with a voltage of 60 V or less in which a plurality of cells are connected in series, and has a configuration in which these secondary batteries are arranged in parallel. The current value supplied to the load 3 is the sum of the current values of these secondary batteries.

Since the circuit employing the high-voltage power supply 100 shown in Fig. 7 requires the isolation transformer 111, the device as a whole is expensive. In addition, since the high-voltage power supply 101 shown in Fig. 8 requires a harness 112 that allows for a plurality of secondary batteries to be grouped and can have a large current pass through, which similarly makes the device as a whole expensive.

Patent Document 1 discloses a vehicle using a high voltage in which there is installed both a high-voltage battery and a low-voltage battery. While installing two batteries allows for flexible adaptation to various usage situations of the load, installing two batteries and forming a circuit for each of them leads to a larger size and higher cost of the device.

### RELATED ART DOCUMENTS

### PATENT DOCUMENTS

Patent Document 1: Japanese Unexamined Patent Application Publication No. 2001-352690

### SUMMARY OF THE INVENTION

### PROBLEMS TO BE SOLVED BY THE INVENTION

When using a high-voltage power supply that supplies power with a high voltage in a vehicle, there was a need to provide insulation between the high-voltage power supply and the vehicle body which the user might touch. There was thus a problem in the conventional art, in that devices associated with high-voltage power supplies became large and expensive.

The present invention was made in view of the above problem, and has an object of providing a vehicle-mounted high-voltage power supply that is safe, inexpensive, and highly versatile.

### MEANS FOR SOLVING THE PROBLEMS

The present invention relates to a high-voltage power supply for mounting to a vehicle, including a plurality of batteries connected in series. In the high-voltage power supply according to the present invention, output terminals provided between the batteries are connected to a ground of a vehicle body.

The high-voltage power supply according to the present invention preferably supplies electric power to a load connected in series with all of the plurality of batteries.

### EFFECTS OF THE INVENTION

In the high-voltage power supply according to the present invention, the output terminals between the batteries connected in series are connected to the ground of the vehicle body, whereby the intermediate voltage between the batteries becomes the voltage of the ground. Since the intermediate potential of the high-voltage power supply becomes equal to the potential of the ground, the maximum potential difference between the high-voltage power supply and the potential of the ground becomes smaller, allowing for safer use of the high-voltage power supply.

Since the high-voltage power supply according to the present invention has a small maximum potential difference from the ground potential, there is no need for insulation, allowing for the device as a whole to be formed more inexpensively.

### BRIEF DESCRIPTION OF THE DRAWINGS

[Fig. 1] Fig. 1 schematically shows a connection state of a high-voltage power supply according to Example 1 and a plurality of loads;
[Fig. 2] Fig. 2 schematically shows the high-voltage power supply according to Example 1;
[Fig. 3] Fig. 3 schematically shows the high-voltage power supply according to Example 1;
[Fig. 4] Fig. 4 schematically shows a connection state of a high-voltage power supply according to Example 2 and a plurality of loads;
[Fig. 5] Fig. 5 schematically shows a connection state of a high-voltage power supply according to Example 3 and a plurality of loads;
[Fig. 6] Fig. 6 schematically shows a connection state of a high-voltage power supply according to Example 4 and a plurality of loads;
[Fig. 7] Fig. 7 schematically shows a connection state of a conventional high-voltage power supply and a plurality of loads; and
[Fig. 8] Fig. 8 schematically shows a connection state of a conventional high-voltage power supply and a plurality of loads.

### EMBODIMENTS FOR CARRYING OUT THE INVENTION

A preferred embodiment of the high-voltage power supply according to the present invention are described below.

A preferred embodiment of the high-voltage power supply according to the present invention is a secondary battery having a plurality of batteries connected in series, and a generator connected to the secondary battery. The batteries used herein have two or more cells (battery cells) connected in series, and have their positive terminals and negative terminals arranged at their end portions. Supply of electric power to an external load can be performed from a terminal of the battery. The cells of the power supply according to the present invention may be lithium-ion cells, nickel hydride cells, ELDC cells, or the like, but lithium-ion cells are particularly preferable.

In the present invention, the term ground refers to the reference point of the potential. In an ordinary vehicle, the vehicle body and conductive parts electrically connected thereto constitute the ground. In the detailed description below, the potentials at the locations indicated by ground terminals are all a common reference potential. All the ground terminals are connected by ordinary wiring, but since showing this wiring would clutter the drawings, illustration thereof is omitted.

The most preferably applicable high-voltage power supply of the present invention is a power supply with an output voltage of 60 V or more and 120 V or less.

The output terminals provided between the batteries of the high-voltage power supply are connected to the ground of the vehicle body, which makes the intermediate potential of the high-voltage power supply the same potential as that of the ground. The positions of the output terminals connected to the ground are preferably located so that the number of batteries on the high-potential side, which is upstream of the output terminals, is the same as the number of batteries on the low-potential side, which is downstream of the output terminals. In other words, the output terminals are preferably positioned so that they divide the number of batteries of the high-voltage power supply into two equal halves.

The high-voltage power supply according to the present invention may be connected to a plurality of loads that operate at different voltages. At least one of the loads is connected in series with all of the batteries of the high-voltage power supply, and is supplied with electric power at the maximum voltage generated during normal operation of the power supply. With respect to loads that require a lower voltage, electric power can be supplied at the required voltage by outputting electric power from part of the batteries.

### EXAMPLES

### (Example 1)

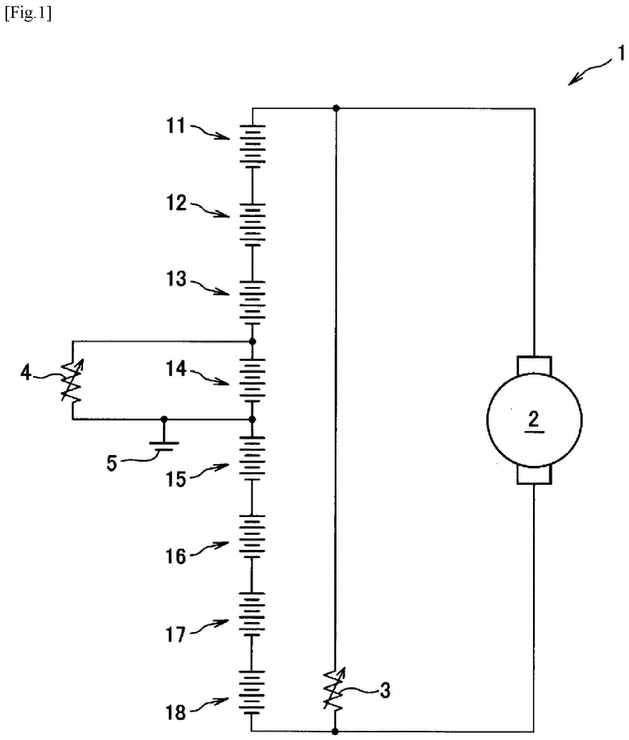

A high-voltage power supply 1 according to Example 1 is described below with reference to the drawings. Fig. 1 is a circuit diagram which schematically shows the high-voltage power supply 1 including a generator 2 connected to a plurality of loads 3, 4. In Fig. 1, batteries 11, 12, 13, 14, 15, 16, 17, and 18, each capable of supplying electric power with a voltage of 12 V, are connected in series, configuring the high-voltage power supply 1 capable of an output of 96 V.

In the present Example, output terminals between the battery 14 and the battery 15 of the high-voltage power supply 1 are connected to the ground 5 of the vehicle body. Since the output terminals connected to the ground 5 are positioned so that they divide the number of batteries in the high-voltage power supply 1 into two equal halves, the intermediate potential of the high-voltage power supply 1 is the same potential as that of the ground 5. As a result, the maximum potential difference between the high-voltage power supply 1 and the ground 5 is 48 V on the plus side, and -48V on the minus side. This small potential difference eliminates the need to insulate the high-voltage power supply 1 from the ground of the vehicle body, and allows for more safe use of the high-voltage power supply.

With respect to the load 3 connected in series with all of the batteries 11, 12, 13, 14, 15, 16, 17, and 18, the high-voltage power supply 1 is capable of supplying electric power with a voltage of 96 V, which is the maximum voltage during normal operation.

At the same time, if a load on the vehicle body side requires electric power with a lower voltage, the high-voltage power supply 1 is capable of supplying electric power without providing any particular insulating means. For example, if the load 4 requires electric power with a voltage of 12 V, electric power can be supplied from the positive and negative terminals of the battery 14.

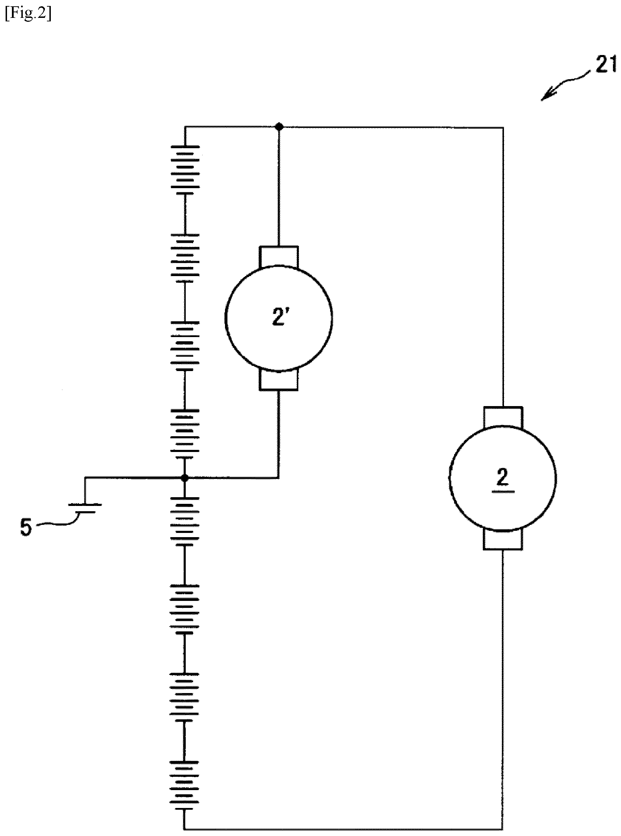

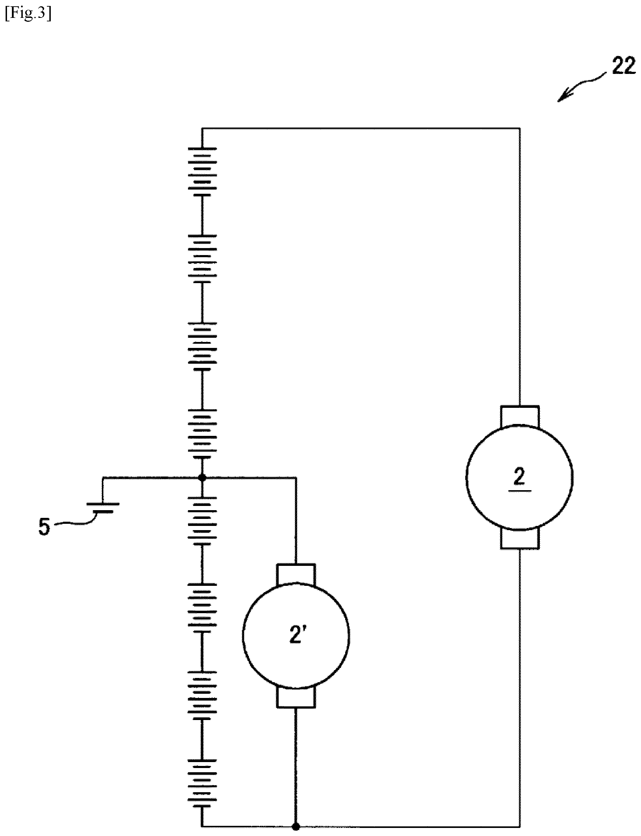

The output terminals of the high-voltage power supply 1 connected to the ground 5 of the vehicle body do not strictly need to be positioned so that they divide the electric potential of the high-voltage power supply 1 into two equal halves. In addition, the batteries 11, 12, 13, and 14 need not be identical to the batteries 15, 16, 17, and 18. Further, when using electric power with a voltage of 48 V, as shown in the high-voltage power supply 21 of Fig. 2, a generator 2' connected to the batteries on the upper side of the ground 5 may be provided to use the upper side voltage. Conversely, as shown in the high-voltage power supply 22 of Fig. 3, a generator 2' connected to the batteries on the lower side of the ground 5 to use the lower side voltage. Alternatively, these generators may be used in combination to supply electric power.

### (Example 2)

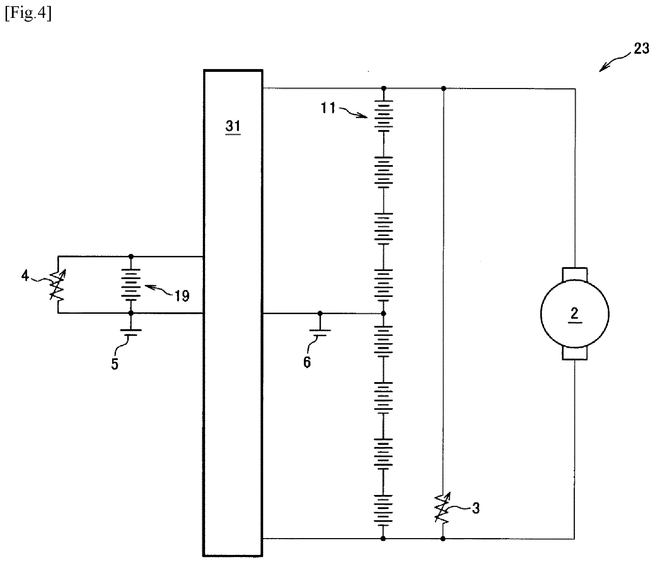

Fig. 4 is a circuit diagram which schematically shows a high-voltage power supply 23 including a generator 2 connected to a plurality of loads 3, 4. Elements with an identical configuration to those in Example 1 are given like reference numerals, and any redundant description is omitted.

In the present Example, there is provided, separately from the high-voltage power supply 23, a battery 19 with a voltage of 12 V for the load 4 on the vehicle body side. Since the output terminals between batteries are connected to a ground 6, the intermediate potential of the high-voltage power supply 23 is identical to the reference potential. Like in Example 1, in the present Example, the maximum potential difference between the high-voltage power supply 23 and the ground on the vehicle body side is small, which eliminates the need to insulate the high-voltage power supply from the vehicle body.

A DC-DC converter 31 is arranged between the high-voltage power supply 23 and the battery 19, allowing the high-voltage power supply 23 to supply electric power to the battery 9.

### (Example 3)

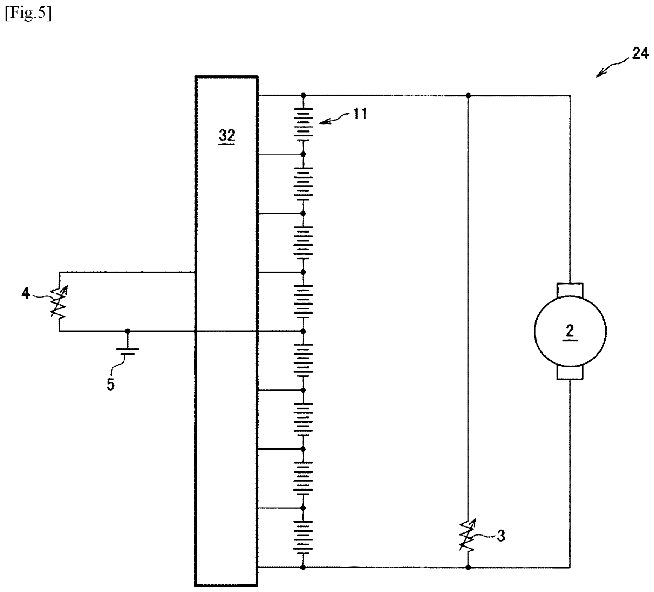

Fig. 5 is a circuit diagram which schematically shows a high-voltage power supply 24 including a generator 2 connected to a plurality of loads 3, 4. In the present Example as well, output terminals between batteries of the high-voltage power supply 24 are connected to a ground 5 of a vehicle body, so that the intermediate potential of the high-voltage power supply 24 is the same potential as that of the ground 5. Also, in the present Example, the maximum potential difference between the high-voltage power supply 24 and the ground is small, eliminating the need to insulate the high-voltage power supply from the vehicle body.

The present Example includes a balancer 32 which is connected in parallel to all of the batteries to form a bypass circuit. In the present Example, an active balancer is preferably used as the balancer 32. The active balancer dynamically balances the charge/discharge state by, for example, temporarily storing electric power of batteries with a high state of charge in a capacitor and redistributing the electric power to batteries with a low state of charge.

The load 4 is connected to the balancer 32 and the high-voltage power supply 24, and is supplied with power from the high-voltage power supply 24. Since reliability of the power supply can be improved by interposing the balancer 32, there is no need for a lead storage battery, which have been widely used in the conventional art.

### (Example 4)

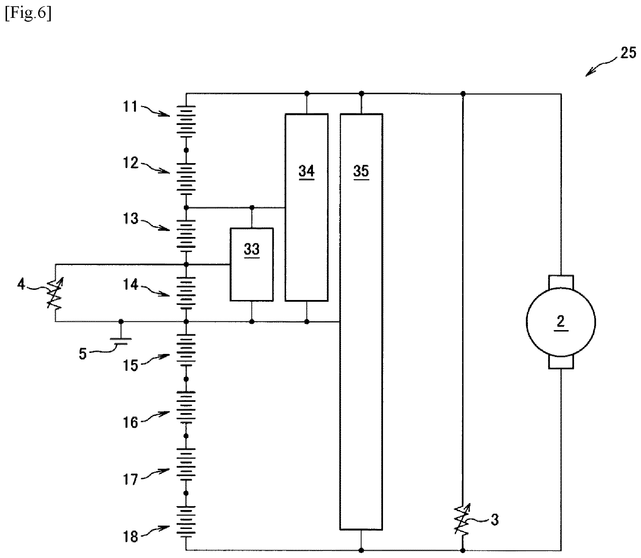

Fig. 6 is a circuit diagram which schematically shows a high-voltage power supply 25 including a generator 2 connected to a plurality of loads 3, 4. In the present Example as well, output terminals between batteries of the high-voltage power supply 25 are connected to a ground 5 of a vehicle body, so that the intermediate potential of the high-voltage power supply 25 is the same potential as that of the ground 5. When supplying power from the high-voltage power supply 25, there is no need to insulate the high-voltage power supply from the vehicle body.

The present Example includes a balancer 35 that equalizes the voltages of the batteries 11, 12, 13, 14, and the batteries 15, 16, 17, 18, a balancer 34 that equalizes the voltages of the batteries 11, 12, and the batteries 13, 14, and a balancer 33 that equalizes the voltages of the battery 13 and the battery 14, to equalize the state of charge of each of the batteries. By connecting the balancers in multiple stages, electric power supply can be performed more stably with a cheaper device configuration.

The configuration of the high-voltage power supply described in the present Examples may be appropriately modified. For example, the positions of the output terminals connected to the ground in the power supply may be appropriately modified according to the prescribed maximum potential difference. In addition, the number and voltage of the batteries included in the power supply, and the number and layer structure of the DC-DC converters and active balancers connected to the batteries, may be appropriately modified.

### INDUSTRIAL APPLICABILITY

Other than in vehicles, the high-voltage power supply according to the present invention may be preferably installed in any industrial equipment.

### DESCRIPTION OF THE REFERENCE NUMERAL

1, 21, 22, 23, 24, 25, 101, 102 High-voltage power supply
2, 2' Generator
3, 4 Load
5, 6 Ground
11, 12, 13, 14, 15, 16, 17, 18 Battery
31 DC-DC converter
32, 33, 34, 35 Active balancer
111 Isolation transformer
112 Harness

## Claims

1. A high-voltage power supply for mounting to a vehicle, including a plurality of batteries connected in series, wherein output terminals provided between the batteries are connected to a ground of a vehicle body.

2. The high-voltage power supply according to Claim 1, wherein the high-voltage power supply supplies electric power to a load connected in series with all of the plurality of batteries.
